# FASCICULE DE BREVET EUROPEEN

(11) **EP 1 155 941 B1**
(45) Date de publication et mention de la délivrance du brevet: **01.09.2004**
(21) Numéro de dépôt: 01401209.0
(22) Date de dépôt: 11.05.2001
(51) Int. Cl.: B62D 21/09, B62D 25/06

(54) **Arche de véhicule automobile destinée à relier deux points de la structure du véhicule**
Bogen für ein Kraftfahrzeug, zur Verbindung von zwei Teilen des Fahrzeugs
Arch for motor vehicle, for connecting two structural parts of the vehicle

(30) Priorité: 17.05.2000 FR 0006307
(43) Date de publication de la demande: 21.11.2001
(73) Titulaire: Wagon Automotive S.A., 78306 Poissy (FR)
(72) Inventeur: Garnier, Fabrice, 78500 Sartrouville (FR); Paumard, Roger, 92500 Rueil Malmaison (FR); Trancart, Olivier, 78940 La Queue les Yvelines (FR)
(74) Mandataire: Jacobson, Claude

(56) Documents cités:
- DE-A- 3 204 526
- FR-A- 2 740 094
- US-A- 5 738 405

## Description

L'invention concerne le domaine des véhicules automobiles. Plus précisément, elle concerne une conception nouvelle d'une arche de véhicule automobile, reliant une partie avant et une partie arrière de la structure du véhicule au niveau de l'habitacle.

On connaît des véhicules automobiles comportant des éléments appelés « arches ». Ces arches sont des montants supérieurs longitudinaux reliant, par exemple, la partie supérieure du montant du pare-brise à la partie arrière de la structure du véhicule. Ces arches sont destinées à supporter un toit fixe amovible du véhicule. Elles sont fixées au véhicule par des moyens verrouillables et déverrouillables, permettant à l'utilisateur de transformer à volonté son véhicule en coupé pourvu d'un toit, en coupé dépourvu de toit, ou en cabriolet ayant un espace latéral totalement ouvert sur l'extérieur.

Une arche selon le préambule de la revendication 1 est par exemple connue du document US-A-5 738 405.

Ces arches peuvent être réalisées au moyen de pièces uniques. Elles comportent à leurs deux extrémités des embouts permettant leur verrouillage et leur déverrouillage dans des mécanismes correspondants fixés sur le véhicule.

Ces arches doivent présenter une résistance suffisante pour, lorsqu'elles sont en place, constituer une protection pour les passagers du véhicule en cas de retournement. A cet effet, une arche réalisée en un matériau monobloc serait une pièce relativement lourde dont le montage et le démontage sur le véhicule par une personne seule serait malaisé.

Le but de l'invention est de proposer une conception d'arche de véhicule automobile légère, et présentant cependant toutes les caractéristiques souhaitables de rigidité.

A cet effet, l'invention a pour objet une arche de véhicule automobile destinée à relier deux points de la structure dudit véhicule et leur étant connectée par des moyens verrouillables et déverrouillables, caractérisée en ce qu'elle comporte :
- une âme tubulaire comportant à chacune de ses extrémités un embout destiné à coopérer avec lesdits moyens de fixation de l'arche sur la structure du véhicule ;
- au moins un élément raidisseur solidaire de l'âme et traversé par celle-ci; et
- une enveloppe entourant l'âme, comportant une partie inférieure et une partie supérieure, lesdites parties étant fixées à la fois l'une à l'autre audit raidisseur et auxdits embouts.

Selon une forme préférée de l'invention, l'arche de véhicule comporte au moins deux éléments raidisseurs.

Dans ce cas, lesdits éléments raidisseurs comportent avantageusement sur leur surface extérieure des moyens permettant la fixation d'une galerie de toit, et la partie supérieure de l'enveloppe entourant l'âme comporte des orifices rendant lesdits moyens de fixation accessibles de l'extérieur.

Selon une autre caractéristique préférée de l'invention, l'arche de véhicule comporte au moins un élément fixé à l'âme tubulaire par l'une de ses extrémités, et comportant à son autre extrémité des moyens de fixation pour une poignée de maintien tournés vers l'habitacle du véhicule, lesdits moyens de fixation étant accessibles par des orifices pratiqués dans la partie inférieure de l'enveloppe entourant l'âme.

La partie supérieure de l'enveloppe entourant l'âme comporte de préférence une portée sur laquelle peut reposer un toit coulissant ou un toit amovible.

L'enveloppe entourant l'âme comporte préférentiellement des moyens de fixation d'un joint d'étanchéité destiné à assurer l'étanchéité du contact entre au moins une porte fermée du véhicule et l'arche.

Comme on l'aura compris, l'invention consiste à réaliser l'arche non plus en une pièce unique, mais sous forme d'un tube central auquel est fixé au moins un élément raidisseur qu'elle traverse. Le tube et le raidisseur sont eux-mêmes entourés par une enveloppe en deux parties fixées à la fois l'une à l'autre et au raidisseur. De préférence, l'arche comporte au moins deux raidisseurs, ce qui procure une plus grande rigidité à l'arche qu'un raidisseur unique si celle-ci doit être de dimensions relativement importantes. De plus, ces deux raidisseurs peuvent être équipés de moyens de fixation d'une galerie de toit.

L'invention sera mieux comprise à la lecture de la description qui suit, donnée en référence aux figures annexées suivantes :
- la figure 1 qui représente schématiquement un véhicule automobile équipé d'une arche selon l'invention ;
- la figure 2 qui représente, vue en coupe transversale selon II/II, au niveau de l'un de ses éléments raidisseurs, une arche selon l'invention ;
- la figure 3 qui montre, vue en coupe transversale selon III/III une arche selon l'invention, au niveau de l'emplacement d'un point de fixation d'une poignée de maintien sur cette arche.

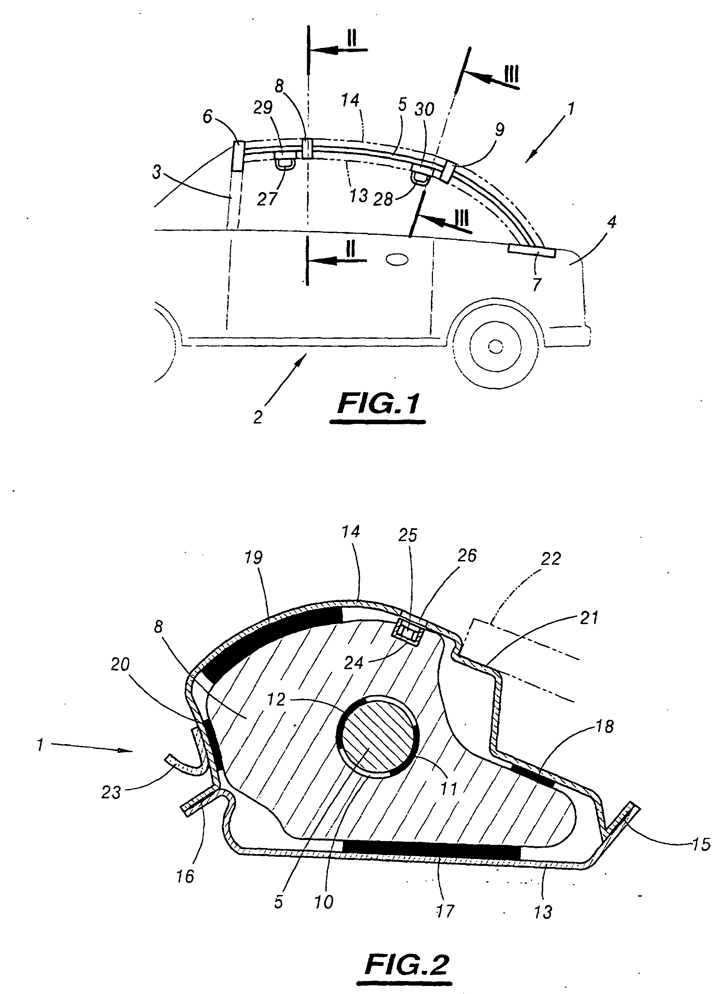

La figure 1 montre schématiquement une disposition possible de l'arche 1 selon l'invention sur un véhicule automobile 2. L'arche 1 relie un élément situé vers la partie avant de la structure du véhicule 2, tel qu'un montant 3 de pare-brise, à un élément de structure du véhicule 2 situé à la partie arrière 4 du véhicule.

L'arche 1 selon l'invention comporte en premier lieu une âme centrale 5 de forme tubulaire, réalisée en un matériau tel qu'un matériau métallique, présentant de préférence un bon compromis entre résistance et légèreté. L'aluminium est un exemple d'un tel matériau. A une extrémité de cette âme 5 est fixé un embout 6 qui coopère avec des moyens de fixation non représentés situés sur le montant de pare-brise 3. Ces moyens de fixation et l'embout 6 permettent un verrouillage et un déverrouillage de l'arche 1. A l'autre extrémité de l'arche 1 est fixé un embout 7 qui coopère, de même, avec des moyens de fixation non représentés solidaires de la partie arrière 4 de la structure du véhicule, et permettant également un verrouillage et un déverrouillage de l'arche 1. Ces moyens de verrouillage et déverrouillage sont connus en eux-mêmes, et ne seront pas davantage détaillés.

Sur l'arche 5 sont fixés deux éléments raidisseurs 8, 9. Ceux-ci sont constitués chacun par une pièce massive comportant en son coeur une perforation 10 à l'intérieur de laquelle est insérée l'âme 5 de l'arche 1. Le raidisseur 8 est solidarisé à l'âme 5 par des points de soudage 11, 12.

L'arche 1 comporte également, disposée autour de l'âme 5 et des raidisseurs 8, 9 et solidarisés à ces derniers ainsi qu'aux embouts 6, 7, une enveloppe métallique en deux parties. Cette enveloppe a été représentée en pointillés sur la figure 1 pour y rendre visibles les éléments internes de l'arche 1 (l'âme 5 et les raidisseurs 8, 9). Cette enveloppe comporte une partie inférieure 13 et une partie supérieure 14, qui sont fixées l'une à l'autre par des points de soudure 15, 16 reliant des lèvres ménagées sur les bords des deux enveloppes 13, 14. Par ailleurs, les enveloppes 13, 14 sont solidarisées aux raidisseurs 8, 9 au moyen soit de points de soudure 17, 18, soit de couches de mastic de calage 19, 20. De manière générale, on emploie des points de soudure dans les zones qui, une fois l'arche 1 assemblée sur le véhicule 2, demeureront invisibles de l'extérieur. Le mastic de calage est, lui, employé dans les zones qui demeureront visibles de l'extérieur après l'assemblage de l'arche 1 sur le véhicule 2.

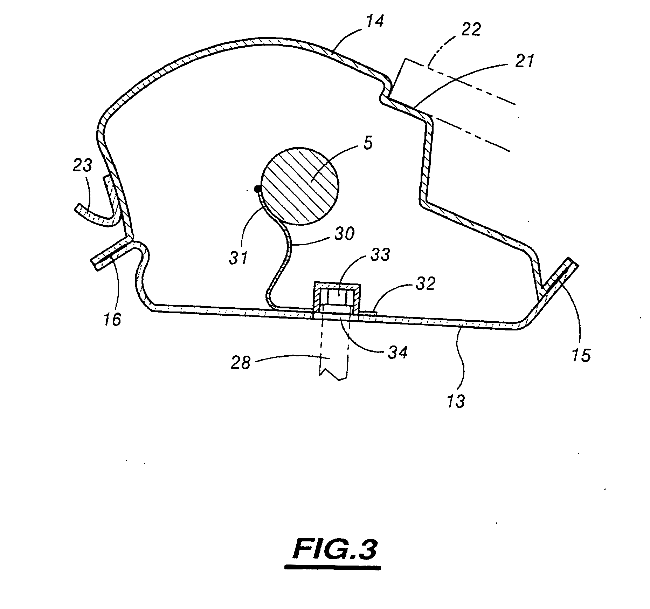

Les enveloppes inférieure 13 et supérieure 14 entourent l'âme 5 et les raidisseurs 8, 9 de l'arche 1 de manière à conférer à l'arche 1 sa forme extérieure visible et fonctionnelle. Réciproquement, la forme des raidisseurs 8, 9 est aussi conditionnée par la forme que l'on confère aux enveloppes 13, 14. En particulier, l'enveloppe supérieure 14 comporte une portée 21 contre laquelle est destinée à s'appuyer le toit du véhicule 2, toit dont le contour est représenté en pointillés 22 sur les figures 2 et 3. Au choix du constructeur, ce toit peut être un élément fixe ou un élément pouvant coulisser le long de la portée 21 et venant se loger, pendant son ouverture, dans un réceptacle prévu dans la partie arrière du véhicule 2. Cette portée 21 peut également supporter divers éléments permettant d'assurer la fixation ou le coulissement du toit 22.

Comme représenté sur la figure 2, l'enveloppe supérieure 14 peut également comporter, disposés sur sa face tournée vers l'extérieur du véhicule 2, des moyens 23 de fixation d'un joint d'étanchéité. Ces moyens 23 peuvent être constitués, comme représenté, par une patte sur laquelle peut venir se clipser un joint en caoutchouc. Ce joint est destiné à assurer l'étanchéité entre l'arche 1 et la partie supérieure du cadre d'une porte du véhicule, ou la partie supérieure de la vitre du véhicule 2 lorsque sa porte ne comporte pas de cadre dans sa partie supérieure.

Un seul raidisseur 8, 9 peut être suffisant pour assurer une rigidité satisfaisante à l'arche 1. Toutefois, au moins deux raidisseurs 8, 9 peuvent être conseillés lorsque l'arche 1 présente une longueur importante. Outre la rigidité supérieure qu'elle confère à l'arche 1, la présence d'au moins deux raidisseurs 8, 9 par arche permet à celle-ci de remplir une fonctionnalité supplémentaire, à savoir de rendre possible la fixation en au moins quatre points d'une galerie de toit à l'arche 1 et à l'arche correspondante qui équipe l'autre côté du véhicule. A cet effet, les raidisseurs 8, 9 peuvent comporter, par exemple une dépression 24 dans laquelle est inséré un moyen de fixation d'une galerie de toit tel qu'un écrou « Rivklé » 25. Des orifices 26 pratiqués dans la partie supérieure 14 de l'enveloppe de l'arche 1 donnent accès à ces moyens de fixation.

Comme représenté sur les figures 1 et 3, l'âme 5 de l'arche 1 peut également comporter des moyens permettant la fixation de poignées de maintien 27, 28 pour les passagers du véhicule. Ces moyens de fixation comprennent chacun un élément de renfort 29, 30, de forme allongée. L'une de ses extrémités 31 est fixée par soudage à l'âme 5 ; l'autre extrémité 32 est fixée par soudage à la partie inférieure 13 de l'enveloppe de l'arche 1. Cette extrémité 32 est conformée de manière à recevoir des moyens de fixation de la poignée 28, tels que des écrous « Rivklé » 33. Des orifices 34 ménagés dans la partie inférieure 13 de l'enveloppe de l'arche 1 donnent accès à ces moyens de fixation.

Cette conception de l'arche 1 procure à cet élément à la fois une bonne rigidité et un poids suffisamment réduit pour rendre sa manipulation bien plus aisée que dans le cas classique où l'arche 1 est composée d'une pièce monobloc. Un utilisateur peut ainsi aisément réaliser seul la transformation du véhicule.

## Revendications

1. Arche (1) de véhicule automobile (2) destinée à relier deux points (3, 4) de la structure dudit véhicule (2) et leur étant connectée par des moyens verrouillables et déverrouillables, **caractérisée en ce qu'**elle comporte :
- une âme tubulaire (5) comportant à chacune de ses extrémités un embout (6, 7) destiné à coopérer avec lesdits moyens de fixation de l'arche (1) sur la structure du véhicule (2);
- au moins un élément raidisseur (8, 9) solidaire de l'âme (5) et traversé par celle-ci ; et
- une enveloppe entourant l'âme (5), comportant une partie inférieure (13) et une partie supérieure (14), lesdites parties (13, 14) étant fixées à la fois l'une à l'autre, audit raidisseur (8, 9) et auxdits embouts (6, 7).

2. Arche (1) de véhicule (2) selon la revendication 1, **caractérisée en ce qu'**elle comporte au moins deux éléments raidisseurs (8, 9).

3. Arche (1) de véhicule (2) selon la revendication 2, **caractérisée en ce que** lesdits éléments raidisseurs (8, 9) comportent sur leur surface extérieure des moyens (24, 25) permettant la fixation d'une galerie de toit, et **en ce que** la partie supérieure (14) de l'enveloppe entourant l'âme (5) comporte des orifices (26) rendant lesdits moyens de fixation (24, 25) accessibles de l'extérieur.

4. Arche (1) de véhicule (2) selon l'une des revendications 1 à 3, **caractérisée en ce qu'**elle comporte au moins un élément (30) fixé à l'âme tubulaire (5) par l'une de ses extrémités (31), et comportant à son autre extrémité (32) fixée à la partie inférieure (13) de l'enveloppe, des moyens de fixation (33) pour une poignée de maintien (27, 28) tournés vers l'habitacle du véhicule (2), lesdits moyens de fixation (33) étant accessibles par des orifices (34) pratiqués dans la partie inférieure (13) de l'enveloppe entourant l'âme (5).

5. Arche (1) de véhicule (2) selon l'une des revendications 1 à 4, **caractérisée en ce que** la partie supérieure (14) de l'enveloppe entourant l'âme (5) comporte une portée (21) sur laquelle peut reposer un toit coulissant ou un toit amovible.

6. Arche (1) de véhicule (2) selon l'une des revendications 1 à 5, **caractérisée en ce que** l'enveloppe entourant l'âme (5) comporte des moyens (23) de fixation d'un joint d'étanchéité destiné à assurer l'étanchéité du contact entre au moins une porte fermée du véhicule (2) et l'arche (1).

## Patentansprüche

1. Bogen (1) für ein Kraftfahrzeug (2), der zwei Punkte (3, 4) der Struktur des Fahrzeugs (2) verbinden soll und mit ihnen durch verriegelbare und entriegelbare Mittel verbunden ist, **dadurch gekennzeichnet, daß** er folgendes umfaßt:
- einen röhrenförmigen Kern (5) mit einem Ansatzstück (6, 7) an jedem seiner Enden, das mit den Mitteln zur Befestigung des Bogens (1) an der Struktur des Fahrzeugs (2) zusammenwirken soll;
- mindestens ein Aussteifungselement (8, 9), das mit dem Kern (5) fest verbunden ist und von diesem durchquert wird; und
- eine Umhüllung, die den Kern (5) umgibt, mit einem unteren Teil (13) und einem oberen Teil (14), wobei die Teile (13, 14) gleichzeitig aneinander, an der Aussteifung (8, 9) und an den Ansatzstücken (6, 7) befestigt sind.

2. Bogen (1) für ein Fahrzeug (2) nach Anspruch 1, **dadurch gekennzeichnet, daß** er mindestens zwei Aussteifungselemente (8, 9) umfaßt.

3. Bogen (1) für ein Fahrzeug (2) nach Anspruch 2, **dadurch gekennzeichnet, daß** die Aussteifungselemente (8, 9) an ihrer Außenfläche Mittel (24, 25) umfassen, die die Befestigung eines Dachgepäckträgers ermöglichen, und daß der obere Teil (14) der Umhüllung, die den Kern (5) umgibt, Öffnungen (26) umfaßt, die die Befestigungsmittel (24, 25) von außen zugänglich machen.

4. Bogen (1) für ein Fahrzeug (2) nach einem der Ansprüche 1 bis 3, **dadurch gekennzeichnet, daß** er mindestens ein Element (30) umfaßt, das am röhrenförmigen Kern (5) durch eines seiner Enden (31) befestigt ist und an seinem anderen Ende (32), das am unteren Teil (13) der Umhüllung befestigt ist, Befestigungsmittel (33) für einen Haltegriff (27, 28) umfaßt, die zum Innenraum des Fahrzeugs (2) gerichtet sind, wobei die Befestigungsmittel (33) durch Öffnungen (34) zugänglich sind, die im unteren Teil (13) der den Kern (5) umgebenden Umhüllung ausgebildet sind.

5. Bogen (1) für ein Fahrzeug (2) nach einem der Ansprüche 1 bis 4, **dadurch gekennzeichnet, daß** der obere Teil (14) der den Kern (5) umgebenden Umhüllung eine Lagerfläche (21) umfaßt, auf der ein Schiebedach oder ein lösbares Dach ruhen kann.

6. Bogen (1) für ein Fahrzeug (2) nach einem der Ansprüche 1 bis 5, **dadurch gekennzeichnet, daß** die den Kern (5) umgebende Umhüllung Mittel (23) zur Befestigung einer Dichtung umfaßt, die die Dichtheit des Kontakts zwischen mindestens einer geschlossenen Tür des Fahrzeugs (2) und dem Bogen (1) sicherstellen soll.

## Claims

1. Arch (1) for a motor vehicle (2) for joining two parts (3, 4) of the structure of said vehicle (2) and being connected to these by lockable and unlockable means, **characterised in that** it comprises:
- a tubular core (5) comprising a joining piece (6, 7) at each of its ends to cooperate with said means for fastening the arch (1) onto the structure of the vehicle (2);
- at least one reinforcing element (8, 9) integral to the core (5), said core passing through it; and
- a sheath enclosing the core (5) comprising a lower part (13) and an upper part (14), said parts (13, 14) being fastened to one another as well as to said reinforcement (8, 9) and said joining pieces (6, 7).

2. Arch (1) for a vehicle (2) according to Claim 1, **characterised in that** it comprises at least two reinforcing elements (8, 9).

3. Arch (1) for a vehicle (2) according to Claim 2, **characterised in that** on their outer surface, said reinforcing elements (8, 9) comprise means (24, 25) to enable a roof rack to be secured, and **in that** the upper part (14) of the sheath enclosing the core (5) has openings (26) rendering said securing means (24, 25) accessible to the outside.

4. Arch (1) for a vehicle (2) according to one of Claims 1 to 3, **characterised in that** it comprises at least one element (30) fastened to the tubular core (5) by one of its ends (31) and having at its other end (32), which is fastened to the lower part (13) of the sheath, means (33) directed towards the passenger compartment of the vehicle (2) for securing a handle (27, 28), said securing means (33) being accessible through openings (34) provided in the lower part (13) of the sheath enclosing the core (5).

5. Arch (1) for a vehicle (2) according to one of Claims 1 to 4, **characterised in that** the upper part (14) of the sheath enclosing the core (5) has a supporting surface (21), on which a sliding roof or a detachable roof can sit.

6. Arch (1) for a vehicle (2) according to one of Claims 1 to 5, **characterised in that** the sheath enclosing the core (5) comprises means (23) for securing a sealing strip to ensure a contact seal between at least one closed door of the vehicle (2) and the arch (1).
